# EUROPEAN PATENT APPLICATION

(11) **EP 4 629 005 A1**
(43) Date of publication of application: **08.10.2025**
(21) Application number: 23897727.6
(22) Date of filing: 27.11.2023
(51) Int. Cl.: G05B 19/414, B23Q 17/00

(54) **MACHINE TOOL**

(30) Priority: 30.11.2022 JP 2022191524
(71) Applicant: Makino J Co., Ltd., Aiko-gun Kanagawa 243-0303 (JP)
(72) Inventor: YOSHIDA, Genki, Aiko-gun, Kanagawa 243-0303 (JP); SAKATA, Hisanori, Aiko-gun, Kanagawa 243-0303 (JP); OGURA, Atsushi, Aiko-gun, Kanagawa 243-0303 (JP)
(74) Representative: Lavoix
(86) International application number: PCT/JP2023/042361
(87) International publication number: WO 2024/117079

(57) **Abstract**

A machine tool (10) comprises: a feed shaft apparatus (16) that moves a workpiece and a tool relative to each other; an NC apparatus (12) for the feed shaft apparatus; and an input/output controller (42) which is interposed between a plurality of devices (26, 28, 30) that output signals and the NC apparatus to connect the devices to the NC apparatus. The input/output controller comprises an input unit (32) to which the devices are connected, and that acquires the signals from the devices as current information and converts the current information into stored information; and a storage unit (34) that is connected to the input unit, and that receives and stores the stored information from the input unit.

## Description

### FIELD

The present invention relates to a machine tool which can acquire information output from devices such as sensors and switches, and can change set values of the devices, as required.

### BACKGROUND

Devices are conventionally controlled based on signals from various sensors and switches. For example, Patent Literature 1 describes a hydraulic clamp device in which a signal (measurement data) indicating the pressure of hydraulic oil in a hydraulic fluid chamber is input from a pressure sensor of the hydraulic clamp device to an electronically controlled arithmetic processing device comprising a microcomputer, a signal (measurement data) indicating the amount of rotation of an actuating bolt is input from a rotation angle sensor, and a workpiece gripping start point is detected based on a pressure change in the hydraulic oil in the hydraulic fluid chamber relative to the amount of rotation of the actuating bolt by the rotation drive of an electric motor.

### [CITATION LIST]

### [PATENT LITERATURE]

[PTL 1] WO 2022/044215

### SUMMARY

### [TECHNICAL PROBLEM]

In order to connect a device to the control device of a machine or equipment and acquire and convert detailed information from the device or change settings, there is a problem in that interface specifications must be developed for each device to be connected, since there is no standard output format for the signals output from the device (voltage values, current values, etc.).

The present invention aims to solve the problems of the prior art, and an object thereof is to enable a machine tool to automatically acquire signals from any device connected to the machine tool.

### [SOLUTION TO PROBLEM]

In order to achieve the object described above, there is provided a machine tool, comprising a feed-axis device for moving a workpiece and a tool relative to each other, an NC device for the feed-axis device, and an input/output controller between a plurality of devices which output signals and the NC devices for connecting the devices to the NC device, wherein
the input/output controller comprises an input unit which connects the devices, which receives signals from the devices as current information, and which converts the current information into memory information, and a memory unit which is connected to the input unit and which receives and stores the memory information from the input unit.

### [ADVANTAGEOUS EFFECTS OF INVENTION]

According to the present invention, the signals from the devices (voltage value, current value, etc.) can be acquired by the input unit and stored in the memory unit. Any device can be connected to the machine tool and the signals thereof can be acquired, eliminating the need to perform conversion corresponding to the signal of each device.

### BRIEF DESCRIPTION OF DRAWINGS

FIG. 1 is a block diagram showing an overview of a machine tool according to a first embodiment of the present invention.
FIG. 2 is a block diagram showing an overview of a machine tool according to a second embodiment of the present invention.
FIG. 3 is a block diagram showing an overview of a machine tool according to a third embodiment of the present invention.
FIG. 4 is a block diagram showing an overview of a machine tool according to a fourth embodiment of the present invention.
FIG. 5 is a block diagram showing an overview of a machine tool according to a fifth embodiment of the present invention.

### DESCRIPTION OF EMBODIMENTS

Preferred embodiments of the present invention will be described below with reference to the attached drawings.

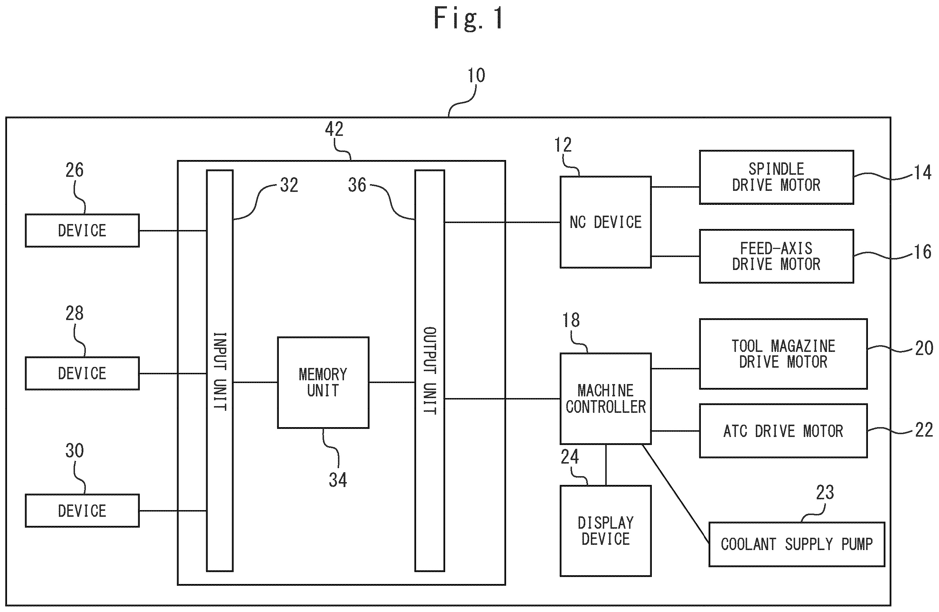

Referring to FIG. 1, a machine tool 10 according to a first embodiment of the present invention may comprise, for example, a spindle (not illustrated) including a rotating tool (not illustrated) attached to a tip thereof, a table (not illustrated) for affixation of a workpiece (not illustrated) so as to face the tip of the spindle, and a feed-axis device (not illustrated) for moving the spindle and the table relative to each other. The feed-axis device may be a linear feed-axis device having three orthogonal axes including the X-axis, Y-axis, and Z-axis. In addition to the linear feed-axis device, the feed-axis device may also comprise an A-axis, a B-axis, and/or a C-axis rotary feed-axiss. The machine tool 10 may also comprise peripheral devices such as a tool magazine (not illustrated), an automatic tool changer (not illustrated), and a coolant supply device (not illustrated).

The machine tool 10 further comprises an NC device 12 for controlling the spindle and the feed-axis, and a machine control device 18 for controlling the peripheral devices described above. The NC device 12 controls, for example, a spindle drive motor 14 for rotating the spindle and feed-axis drive motor 16 for driving the feed-axis device. The machine control device 18 controls, for example, a drive motor (tool magazine drive motor) 20 for a transport device (not illustrated) for transporting tools in the tool magazine, an ATC drive motor 22 for driving an exchange arm (not illustrated) of the automatic tool changer, and a coolant supply pump 23 for the coolant supply device.

The machine tool 10 further comprises a display device 24. The display device 24 can be, for example, a display (not illustrated) attached to a control panel (not illustrated) of the machine tool 10, and in particular, a touch panel with which functions corresponding to icons can be operated by touching or tapping displayed icons. In the present embodiment, the machine control device 18 comprises a display controller (not illustrated) for controlling the contents displayed on the display device 24.

The machine tool 10 further comprises an input/output controller 42. In the present embodiment, the input/output controller 42 comprises an input unit 32, a memory unit 34, and an output unit 36. The input unit 32, the memory unit 34, and the output unit 36 can be constituted by a computer including a CPU (Central Processing Unit), a memory device such as RAM (Random Access Memory) or ROM (Read-Only Memory), a storage device such as an HDD (Hard Disk Drive) or an SSD (Solid State Drive), an input/output port, and bidirectional buses for interconnecting these, and associated software. The input/output controller 42 may be constituted by software as a part of the NC device 12 or the machine control device 18.

The input unit 32 can connect a plurality of devices 26, 28, 30. The input unit 32 has analog and/or digital connection ports which are suitable for connecting the devices 26, 28, 30. The devices 26, 28, 30 can be sensors or switches. The sensors can be, for example, gap sensors (not illustrated), optical distance sensors (not illustrated) using laser beams or infrared rays, hydraulic sensors (not illustrated), acceleration sensors (not illustrated), or load cells (not illustrated). The switches can be, for example, microswitches (not illustrated) or photoelectric switches (not illustrated). The devices described above may further output self-diagnosis signals. The input unit 32 acquires the signals of the devices 26, 28, 30 as current information.

A gap sensor can be used to acquire, for example, the seating state of a workpiece during clamping to a jig mounted on the table of the machine tool 10, during machining or other operations, the type of workpiece, and the presence or absence of a workpiece as the presence or absence of physical contact, and to acquire a cylinder stroke position as a minute flow rate. In the case of a gap sensor, diagnosis of the condition thereof can be performed by monitoring the flow rate.

An optical distance sensor can be used to identify different workpiece types or the presence or absence of a workpiece. A hydraulic pressure sensor can be used to identify the clamping pressure of a clamping device (not illustrated) for securing the workpiece on a fixture during machining or other operations of the workpiece.

An acceleration sensor can acquire or detect vibrations during machining or other operations to confirm whether or not the tool is balanced, or whether chatter vibrations are occurring during machining. An audio microphone may be used in place of an acceleration sensor.

A load cell can be used to acquire the clamping load applied to the fixture while the workpiece is being affixed, or the load exerted from the workpiece to the seating surface of the fixture, to confirm whether the clamping load is at a specified value, to confirm for clamping load errors, or to obtain the machining load. As a result, it can be confirmed whether the machining load has increased due to wear of the tool cutting edge, or whether there is sudden variation in casting when the workpiece is composed of cast iron.

A micro switch or photoelectric switch can acquire the presence or absence of physical contact or the presence or absence of light to identify different types of workpieces or the presence or absence of a workpiece.

The input unit 32 may be connected not only to the devices 26, 28, 30, but also to other machines such as a coordinate measuring machine or server managed by the manufacturer of the machine tool via a communication network such as a LAN or the Internet, to receive measurement data of the workpieces, information related to the model numbers of the devices 26, 28, 30, and the conversion method, which will be described below.

The memory unit 34 stores the signals (voltage values, current values, etc.) of the devices 26, 28, 30 acquired by the input unit 32 as memory information. The memory information stored in the memory unit 34 is output to the NC device 12 connected to the output unit 36. As shown in the drawing, the machine control device 18 may be connected to the output unit 36 to output the memory information to the machine control device 18 as well. The output unit 36 has a connection port (not illustrated), preferably a digital connection port, which is suitable for connecting the NC device 12 and the machine control device 18.

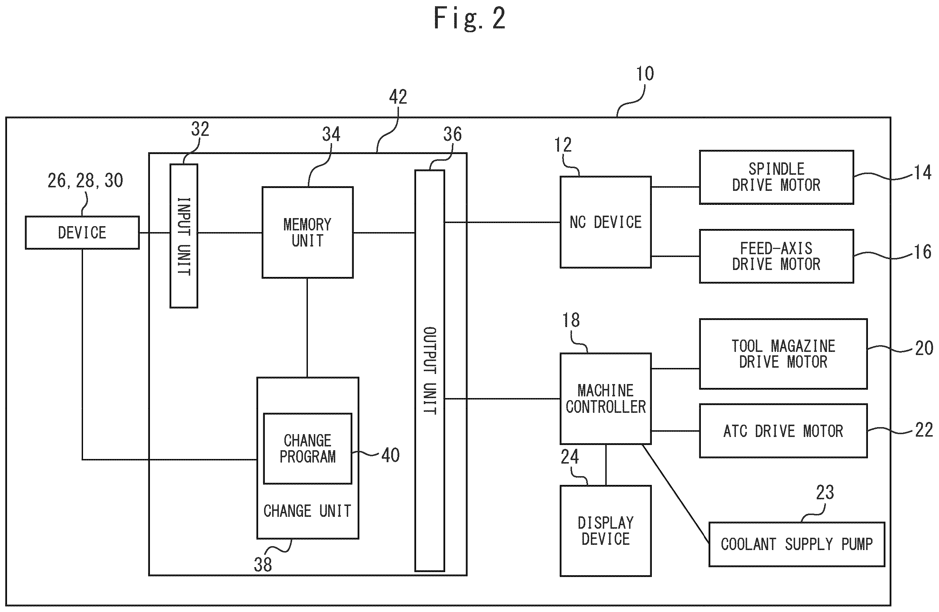

Next, a machine tool according to a second embodiment of the present invention will be described with reference to FIG. 2. In FIG. 2, components which are identical to those of the first embodiment shown in FIG. 1 have been assigned identical reference signs, and duplicate descriptions thereof have been omitted.

In the second embodiment, the input/output controller 42 comprises a change unit 38. The change unit 38 stores change programs 40 corresponding to each of the devices 26, 28, 30, changes the memory information stored in the memory unit 34 using the change programs 40, and outputs the change information from the change unit 38 to each of the devices 26, 28, 30 or to another device related to each of the devices 26, 28, 30. As an example, when the device is a pressure sensor and the other device is a regulator related to the pressure sensor, the change information is input as a setting value inside the regulator by rewriting the memory that can be read and written at any time using the change program. In this manner, the setting value of the regulator can be changed.

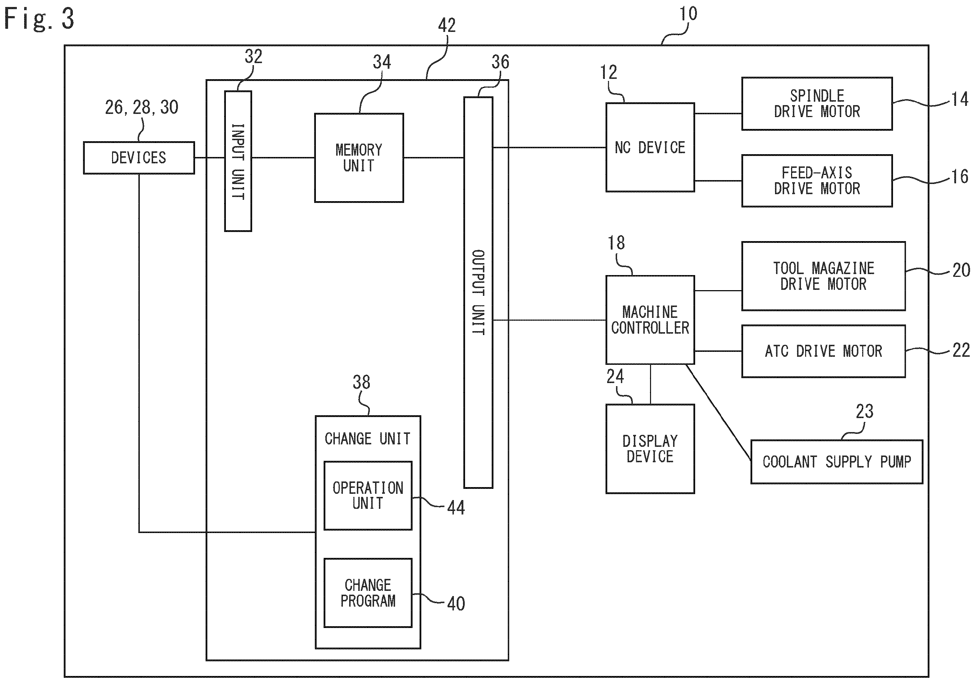

Next, a machine tool according to a third embodiment of the present invention will be described with reference to FIG. 3. In FIG. 3, components identical to those of the embodiments of FIGS. 1 and 2 have been assigned identical reference signs, and duplicate descriptions thereof have been omitted.

In the third embodiment, the change unit 38 comprises an operation unit 44. The operation unit 44 may be constituted by a touch panel, a keyboard, a microphone, or the like. When the display device 24 is constituted by a touch panel, the touch panel may be used as the operation unit 44. For example, when the device is a pressure sensor used for a clamping device on a jig, the display device 24 always displays signal information of the pressure of the clamping device detected by the pressure sensor, such as a voltage value or a current value. The signal information is reacquired periodically as required, and the display of the display device 24 can be updated in response to the reacquisition. When an operator wishes to increase the clamping pressure, after confirming the change method using a catalog or manual of the pressure sensor, the operator can input an appropriate value into the operation unit 44 to change the settings of the pressure sensor and increase the clamping pressure. The change unit 38 performs the processing required for inputting the inputted value to the devices 26, 28 and 30 by the change program 40.

It should be noted that the input unit may convert the signal from the device into bit information and output it to the memory unit, and the change unit may convert the memory information from the memory unit into a format which can be received by the device and output it.

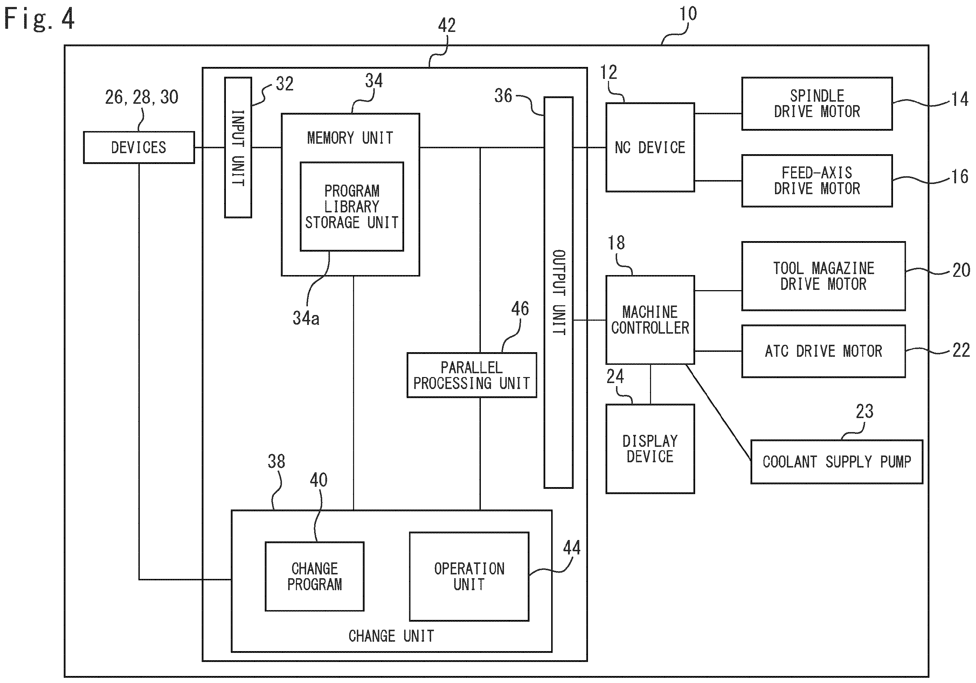

Next, a machine tool according to a fourth embodiment of the present invention will be described with reference to FIG. 4. In FIG. 4, components identical to those of the embodiments of FIGS. 1, 2, and 3 have been assigned identical reference signs, and duplicate descriptions thereof have been omitted.

In the fourth embodiment, the input/output controller 42 comprises a parallel processing unit 46. In general, a machine tool can only acquire data periodically, but in the present embodiment, the parallel processing unit 46 can sequentially record and process memory information in parallel (simultaneously) with the operation of the machine tool 10. For example, the parallel processing unit 46 can monitor the state of the clamping pressure of the jig during machining at regular intervals and record it in chronological order based on the memory information of the pressure sensors as the devices 26, 28, 30 connected to the input unit 32. By comparing this recorded state with the chronological order of the machining program used during machining, it can be confirmed how the clamping pressure has changed at which machining timing.

The parallel processing unit 46 may transmit the change information to the change unit 38 by means of a predetermined monitoring program. For example, when the clamping pressure of the jig decreases during a specific machining, the parallel processing unit 46 can instruct the change unit 38 to change the clamping pressure of the jig by a monitoring program that determines that the clamping pressure is not appropriate.

The memory unit 34 may allocate a program library storage unit 34a to a part of the storage area, and store and memorize a plurality of change programs in the program library storage unit 34a. In general, each device requires a different change program. For example, when changing the clamping force of a hydraulic clamp, a change program for inputting change information to a regulator related to a pressure sensor of the hydraulic clamp is required. As another example, a change program may be required for acquiring vibration information from a vibration sensor of the spindle with an acceleration pickup, calculating machining conditions under which the vibration is stable, such as the rotation speed of the spindle and the feed speed of the feed-axis, and inputting the calculated change information to an NC program.

The program library storage unit 34a can store change programs created corresponding to the model numbers and changes of the devices 26, 28, 30 in association with, for example, the model numbers. When a new device is connected to the input unit 32, the input/output controller 42 acquires model number information from the new device and searches the program library storage unit 34a for a change program corresponding to a similar model number. If a change program is present, it is displayed on the display device 24 that the change program may be applicable to the new device.

It should be noted that the change programs stored in the program library storage unit 34a may be associated with manufacturer information, series information, category information, etc., related to the device in addition to the model number information of the device. When a new device is connected to the input unit 32, the input/output controller 42 acquires manufacturer information, series information, category information, etc., in place of the model number information of the device, searches the program library storage unit 34a for a change program corresponding to this information, i.e., which can be applied to the new device, and when such a change program is present, it may be displayed on the display device 24 that the change program can be applied to the new device. The corresponding change program may be searched for from a plurality of sets of information related to the device, for example, the manufacturer information and category information of the device. Furthermore, when the program library storage unit 34a displays the possibility of applying the change program on the display device 24, it may simultaneously display the basis for determining that the change program can be applied, and may simultaneously display the applicability of the change program, i.e., the degree of possibility of application.

The operator can confirm the change program displayed on the display device 24, and when it is determined that the change program can be applied to a new device, they can input the application of the change program to the change unit 38 via the operation unit 44. In this manner, a change program can be reused without creating a new one. When applying a change program to a new device, though it may be necessary to modify the change program, even in such a case, the number of steps can be reduced as compared to creating a new change program. It should be noted that if a change program corresponding to a similar model number is not found in the program library storage unit 34a as a result of the search, the display device 24 may display a message to that effect.

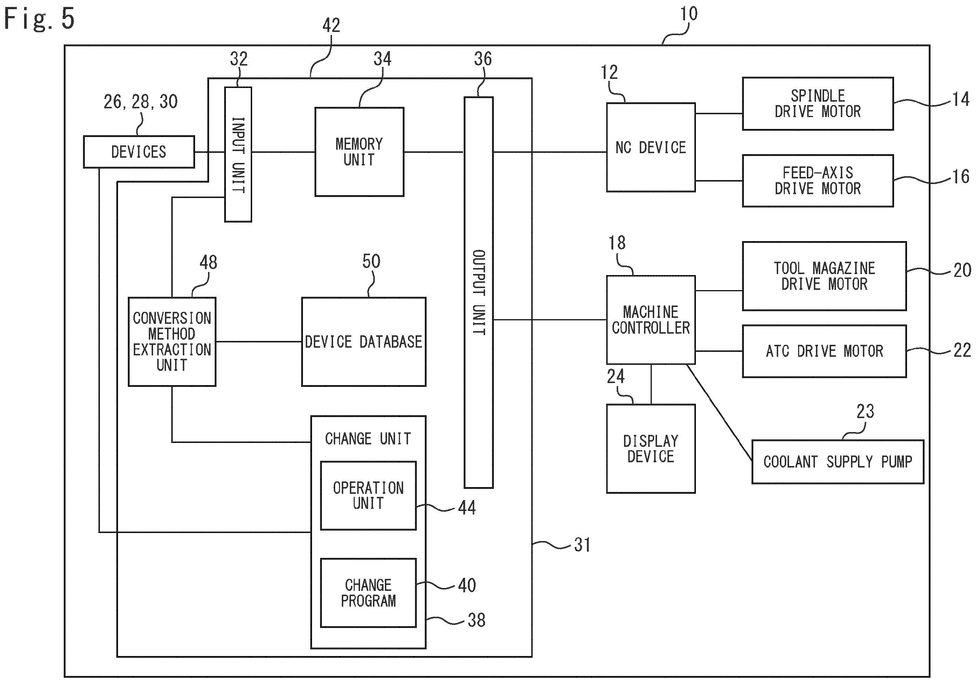

Next, a machine tool according to a fifth embodiment of the present invention will be described with reference to Fig. 5. In FIG. 5, components identical to those of the embodiments of FIGS. 1, 2, 3, and 4 have been assigned identical reference signs, and duplicate descriptions thereof have been omitted.

When the signal output from the device is an analog value such as a voltage, the input/output controller can store and output the signal as an analog value, but as in the third embodiment described above, the operator must individually confirm the conversion method before response. To solve this problem, when the signal of the device 26, 28, 30 acquired by the input unit 32 is stored in the memory unit 34 as memory information, the signal can be converted to a converted value which can be used in practice by the operator by an appropriate conversion method (first conversion method). Furthermore, when the change information is input from the change unit 38 to the device 26, 28, 30, the change information can be converted from a converted value which can be used by the operator in practice to a converted value which is suitable for input to the device (or related device) by an appropriate conversion method (second conversion method).

In the fifth embodiment, the input/output controller 42 comprises a conversion method extraction unit 48 and a device database 50. The conversion method extraction unit 48 searches the device database 50 based on the model number information output from the devices 26, 28, 30 to confirm the first conversion method and the second conversion method, and transmits the first conversion method to the input unit 32 and the second conversion method to the change unit 38. The input unit 32 converts the signals from the devices 26, 28, 30 into a first converted value (which can be used by the operator in practice) by the first conversion method, outputs it to the memory unit 34 as the memory information, and displays it on the display device 24. The change unit 38 also converts the change information input from the operation unit 44 into a second converted value (which is suitable for input to the devices 26, 28, 30) and outputs it to the devices 26, 28, 30. As described in the fourth embodiment, manufacturer information, series information, category information, etc., may be used in place of the model number information of the device, or a plurality of sets of information may be used in combination.

In the present embodiment, the signals can automatically be changed from the model number information of the devices 26, 28, 30 to converted values which can be used by the operator in practice (MPa for pressure, mm for strain, etc.), and the change information can be converted to a second converted value and output to the devices 26, 28, 30. Thus, the operator need not individually confirm the conversion method. When there are a plurality of signals which can be output from the devices 26, 28, 30, a plurality of conversion methods may be stored in the device database 50.

The machine tool may be connected to other machines or a server via a communication network such as a LAN or the Internet. For example, though the device database 50 is illustrated as being directly connected to the conversion method extraction unit 48 in FIG. 5, it may be constituted by a server managed by the manufacturer of the machine tool and connected to the conversion method extraction unit 48 via the input unit 32. The device database 50 is always kept up to date by the manufacturer of the machine tool. The machine tool may be connected to a three-dimensional measuring device for measuring the workpiece to be machined by the machine tool via the network. In addition to the comparison of the time-series information of the clamping pressure state of the jig during machining recorded by the parallel processing unit 46 and the time-series information of the machining program used during machining, as described in the fourth embodiment, by adding workpiece measurement information of the three-dimensional measuring device, more detailed machining information can be analyzed. These sets of information can also be used as training data for machine learning to derive machining conditions with higher production efficiency and machining accuracy.

In any embodiment, input to the change unit from the input/output controller via the NC device and machine control device may be performed. This enables detailed control of the device according to the intent of the operator via functions and programs such as custom macros.

### REFERENCE SIGNS LIST

- 10: Machine Tool
- 12: NC Device
- 14: Spindle Drive Motor
- 16: Feed-Axis Drive Motor
- 18: Machine Control Device
- 20: Tool Magazine Drive Motor
- 22: ATC Drive Motor
- 23: Coolant Supply Pump
- 24: Display Device
- 26: Device
- 28: Device
- 30: Device
- 32: Input Unit
- 34: Memory Unit
- 34a: Program Library Storage Unit
- 36: Output Unit
- 38: Change Unit
- 40: Change Program
- 42: Input/Output Controller
- 44: Operation Unit
- 46: Parallel Processing Unit
- 48: Conversion Method Extraction Unit
- 50: Device Database

## Claims

1. A machine tool, comprising:
a feed-axis device for moving a workpiece and a tool relative to each other,
an NC device for the feed-axis device, and
an input/output controller between a plurality of devices which output signals and the NC devices for connecting the devices to the NC device, wherein
the input/output controller comprises an input unit which connects the devices, which receives signals from the devices as current information, and which converts the current information into memory information, and
a memory unit which is connected to the input unit and which receives and stores the memory information from the input unit.

2. The machine tool according to claim 1, wherein the input/output controller further comprises a change unit which is connected to the memory unit and which receives the memory information from the memory unit, and
the change unit changes the memory information received from the memory unit based on a change program corresponding to each of the devices connected to the input unit, and outputs the changed memory information to the device or to another device related to the device among the plurality of devices.

3. The machine tool according to claim 2, wherein the change unit comprises an operation unit which is operated by an operator for inputting change information to the change unit.

4. The machine tool according to claim 2, wherein the input unit converts the current information from the devices into bit information and outputs it to the memory unit, and the change unit converts the memory information from the memory unit into a format that which be received by the devices and outputs it.

5. The machine tool according to claim 2, wherein the input/output controller further comprises a parallel processing unit which sequentially receives the memory information from the memory unit and holds and records it in chronological order.

6. The machine tool according to claim 2, wherein the input/output controller further comprises a program library storage unit which associates and stores a change program corresponding to each device with a model number of the device or information related to the model number.

7. The machine tool according to claim 2, wherein the input/output controller further comprises a machine database in which model numbers of the devices or related devices other than the devices are associated with a conversion method for the devices or the related devices, and
a change method extraction unit which is connected to the machine database for searching the machine database based on the model numbers of the devices or the related devices to extract conversion methods suitable for the devices or the related devices.

8. The machine tool according to any one of claims 1 to 7, wherein the machine tool is connected to another machine or a server via a communication network.
